# EUROPÄISCHE PATENTSCHRIFT

(11) **EP 3 932 613 B1**
(45) Veröffentlichungstag und Bekanntmachung des Hinweises auf die Patenterteilung: **22.02.2023**
(21) Anmeldenummer: 20000282.2
(22) Anmeldetag: 10.08.2020
(51) Int. Cl.: B23Q 1/03, B23Q 3/06, B25B 5/06

(54) **VERFAHREN UND VORRICHTUNG ZUM KONTAKTLOSEN VERSETZEN EINES SPANNBALKENS AUF EINEM CNC-BEARBEITUNGSZENTRUM**
METHOD AND DEVICE FOR CONTACTLESS DISPLACEMENT OF A TENSION BAR ON A CNC MACHINING CENTRE
PROCÉDÉ ET DISPOSITIF DE REPLACEMENT SANS CONTACT D'UNE BARRE DE SERRAGE SUR UN CENTRE D'USINAGE CNC

(43) Veröffentlichungstag der Anmeldung: 05.01.2022
(73) Patentinhaber: Westphal, Rene, 31787 Hameln (DE)
(72) Erfinder: Westphal, Rene, 31787 Hameln (DE); Westphal, Angelina, 31787 Hameln (DE)
(74) Vertreter: Szaunig, Bernd

(56) Entgegenhaltungen:
- EP-A1- 1 555 084
- EP-A1- 3 098 024
- CN-A- 106 002 410

## Beschreibung

Die vorliegende Erfindung betrifft ein Verfahren und eine Vorrichtung zum kontaktlosen Verschieben eines Spannbalkens auf einem CNC-Bearbeitungszentrum, insbesondere mit einer Spannvorrichtung auf einem Spannbalken, deren Spannbacken in besonderer Art und Weise relativ zueinander beweglich angeordnet sind und dadurch ein kontaktloses Versetzen mindestens eines Spannbalkens relativ zu dem zu bearbeitenden Werkstückes ermöglicht.

Derartige Vorrichtungen zur Bearbeitung von Werkstücken auf einem CNC-Bearbeitungszentrum mit einer Spannvorrichtung zum einspannen und bearbeiten von Material ist aus der EP 3 098 024 A1, die die Basis für die Oberbegriffe der Ansprüche 1 und 2 bildet, im Stand der Technik bekannt. Dabei wird das zu bearbeitende Werksstück mit zwei relativ zueinander beweglichen Spannbacken auf einem Spannbalken eingespannt, wobei eine der Spannbacken unter einer Materialauflagefläche versenkbar ist, um damit den Weg frei zu machen, für die Vorbei-/oder Überfahrt einer Werkzeugmaschine, wodurch u.a. eine Zeitersparnis bei der Bearbeitung von Werkstücken erreicht werden soll. Das Absenken der einen Spannbacke erfolgt dadurch, dass diese Spannbacke mit einem drehbar gelagerten Steg fest verbunden ist, der sich über nahezu die gesamte Länge des Spannbalkens erstreckt.

Einer weiteren Druckschrift EP 1 555 084 A1 ist ein CNC-Bearbeitungszentrum mit mindestens einem Spannbalken offenbart, auf dem zwei Spannbacken beweglich mit jeweils einem Antrieb angeordnet sind, zwischen die ein Werkstück zur Bearbeitung eingespannt werden kann.

Ferner ist dem Dokument CN 106 002 410 A1 ein Werkstück zu entnehmen, das mit Hilfe einer durch Hebelwirkung versetzbaren Spannbacke auf einer feststehenden Unterlage festgeklemmt wird.

Des weiteren ist im Stand der Technik eine Vorrichtung aus der DE 103 31 338 B4 bekannt geworden, die ein automatisches Positionierungssystem mit einer Mehrzahl von rechtwinklig zueinander angeordneten verschieblichen Klemmvorrichtungen offenbart, die mit einem einzigen Antrieb verschoben werden können.

Weiterhin offenbart die Druckschrift G 95357 B eine Spannvorrichtung für Werkstücke auf einer CNC-gesteuerten Werkzeugmaschine mit einer Spannvorrichtung, die zum Einspannen eines Werkstückes zwischen 2 Spannbacken dient. Ferner ist aus der G 92 17 329.2 eine Spannvorrichtung mit einer beweglichen Spannbacke bekannt geworden, wobei die eine bewegliche Spannbacke mindestens ein Gelenk mit elastischfedernder Wirkung aufweist. Das elastisch-federnde Gelenk an der Spannbacke dient dazu, ein zu bearbeitendes Werkstück möglichst schnell ein- und ausspannen zu können. Die Spannvorrichtung ist dabei auf einer Grundplatte mit einem Nutraster angeordnet, in dem die Spannvorrichtung hin und her bewegt werden kann. Das einzuspannende Werkstück wird mit Hilfe eines Hebels zwischen den Spannbacken eingespannt, wobei sich die bewegliche Spannbacke aufgrund der Federwirkung des Gelenkes beim Lösen der Spannbacken ein wenig vom Werkstück löst.

Als nachteilig im Stand der Technik wird es empfunden, dass unter anderem entweder die Spannbacken oder die Auflage, auf dem das Werkstück aufliegt, zumindest beim Versetzen der Spannvorrichtung des Spannbalkens, um das Werkstück an einer anderen Stelle zu bearbeiten, stets während des Verschiebevorgangs mit dem Werkstück in Berührung steht, wodurch infolge von hängengebliebenen Spänen oder ähnlichen Ablagerungen oder aber durch die Spannbacken selbst ungewollt Kratzer oder Riefen oder Vertiefungen an der Oberfläche des Werkstücks eingezogen werden können, die das Werkstück zumindest in seinem Wert mindern.

Daher ist es Aufgabe der vorliegenden Erfindung, ein Verfahren bzw. eine Vorrichtung bereitzustellen, die in der Lage sind, die Nachteile aus dem Stand der Technik zu beseitigen.

Diese Aufgabe wird mit den Merkmalen der Hauptansprüche erfindungsgemäß gelöst.

Das erfindungsgemäße Verfahren zum kontaktlosen Verschieben zumindest eines Spannbalkens auf einem CNC-Bearbeitungszentrum, wobei der mindestens eine Spannbalken versetzt werden kann, ohne ein einzuspannendes Werkstück während des Verschiebevorgangs des Spannbalkens zu berühren, ist dadurch gekennzeichnet, dass ein Punkt auf mindestens einer beweglichen Spannbacke von zwei beweglichen Spannbacken auf einem Spannbalken eine Bewegung auf einer gekrümmten Bahn ausführt, sodass mit der Bewegung auf der gekrümmten Bahn sowohl die eine bewegliche Spannbacke als auch eine damit verbundene Auflageschiene, die mit der beweglichen Spannbacke verbunden ist, gleichzeitig von der Oberfläche des zu bearbeitenden Werkstückes entfernt werden.

Nach diesem Verfahren arbeitende Spannvorrichtung zum Befestigen eines Werkstückes auf einem CNC-Bearbeitungszentrum mit einer Mehrzahl von Spannbalken, auf dem die Spannvorrichtung mit mindestens zwei beweglichen Spannbacken angeordnet ist, ist dadurch gekennzeichnet, dass sich mindestens ein Punkt einer der beiden beweglichen Spannbacken auf einer Bahn bewegt, die mindestens eine Krümmung aufweist, wobei diese bewegliche Spannbacke mit einer Auflageschiene verbunden ist, durch die die Abstützung des Werkstücks erfolgt.

Dabei ist es vorteilhaft, dass die mindestens eine Krümmung beispielsweise als Kreisbahn ausgebildet ist, die zum Entspannen des Werkstückes in der Spannvorrichtung dient. Ferner ist es vorteilhaft, dass die mindestens eine Spannbacke gelenkig mit mindestens einem Punkt des Spannbalkens verbunden ist.

Weiterhin ist es vorteilhaft, dass die mindestens eine Spannbacke mit mindestens einem Verbindungselement, das als Hebelarm ausgebildet sein kann, verbunden ist.

Ein weiterer Vorteil ist darin zu sehen, dass die mindestens eine Spannbacke gelenkig mit einem Antrieb verbunden ist, wobei das andere Ende des Antriebs gelenkig mit dem Spannbalken verbunden ist.

Ferner ist es vorteilhaft, dass die bewegliche Spannbacke mindestens ein Dämpfungselement und mindestens ein Anschlagelement aufweist.

Ein weiterer Vorteil ist darin zu sehen, dass auf mindestens einer Transportschiene mindestens zwei Spannbalken angeordnet sind, die quer zur Längsachse der mindestens einen Transportschiene bewegt werden können.

Vorteilhaft ist es auch, dass die Spannvorrichtung elektrisch oder hydraulisch oder pneumatisch betrieben wird und elektronisch ansteuerbar ist.

Vorteilhaft ist es ferner, dass der Antrieb im Bereich eines Endes des Spannbalkens angeordnet ist.

Weitere erfindungswesentliche Merkmale gehen aus den Unteransprüchen, der Beschreibung und der Zeichnungen hervor.

Im nun Folgenden wird die Erfindung anhand von Zeichnungen im Detail näher beschrieben. Es zeigt
- Fig. 1:: eine perspektivische Draufsicht auf einen Teil eines CNC-Bearbeitungszentrums (10) mit mindestens einer Transportschiene (15), auf der quer dazu mindestens zwei Spannbalken (7) angeordnet sind und auf den Spannbalken (7) die Spannvorrichtung (1) angeordnet ist;
- Fig. 2:: eine Seitenansicht der Spannvorrichtung (1), bei der ein zu bearbeitendes Werkstück (2) zwischen den Spannbacken (3,4) einliegt;
- Fig. 3:: eine Seitenansicht der Spannvorrichtung (1) bei der ein zu bearbeitendes Werkstück (2) zwischen den Spannbacken (3,4) einliegt und die Spannbacken (3,4) die Oberfläche des Werkstücks (2) nicht berühren;
- Fig. 4:: eine perspektivische Seitenansicht des einen Endes des Spannbalken (7) auf dem die Spannvorrichtung (1) in geöffnetem Zustand mit eingelegtem Werkstück (2) angeordnet ist;
- Fig. 5: eine vergrößerte, perspektivische Allein-Darstellung des Dämpfungselements 13, das mit einer Schelle 26 an dem beweglichen Teil einer Spannbacke 3 einstellbar befestigt ist.

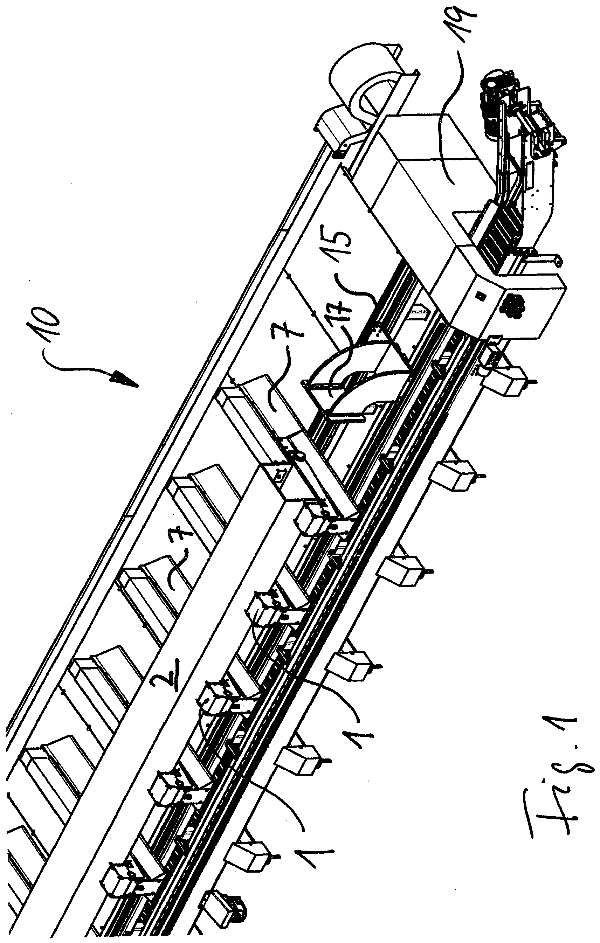

Die Fig. 1 zeigt eine perspektivische Draufsicht auf einen Teil eines CNC-Bearbeitungszentrums 10 mit mindestens einer Transportschiene 15, auf der quer dazu mindestens zwei Spannbalken 7 angeordnet sind und auf den Spannbalken 7 eine Spannvorrichtung 1 angeordnet ist. Die Spannvorrichtung 1 ist in diesem Ausführungsbeispiel aus praktischen Gründen an einem Ende des Spannbalkens 7 angeordnet, um damit eine optimale Größe eines zu bearbeitenden Werkstücks 2 auf dem CNC-Bearbeitungszentrums 10 bearbeiten zu können. Im Endbereich der Transportschienen 15 ist ein Anschlagelement 17 für das Werkstück 2 fest auf den Transportschienen 15 befestigt. Das Anschlagelement 17 definiert aus Sicherheitsgründen das Ende des Spielraumes des zu bearbeitenden Werkstücks 2. Am Ende der Transportschienen 15 ist ein Antriebsaggregat angeordnet, dass im wesentlichen für den Vorschub oder die Bewegung des Werkstücks 2 in Längsrichtung der Transportschienen 15 vorgesehen ist.

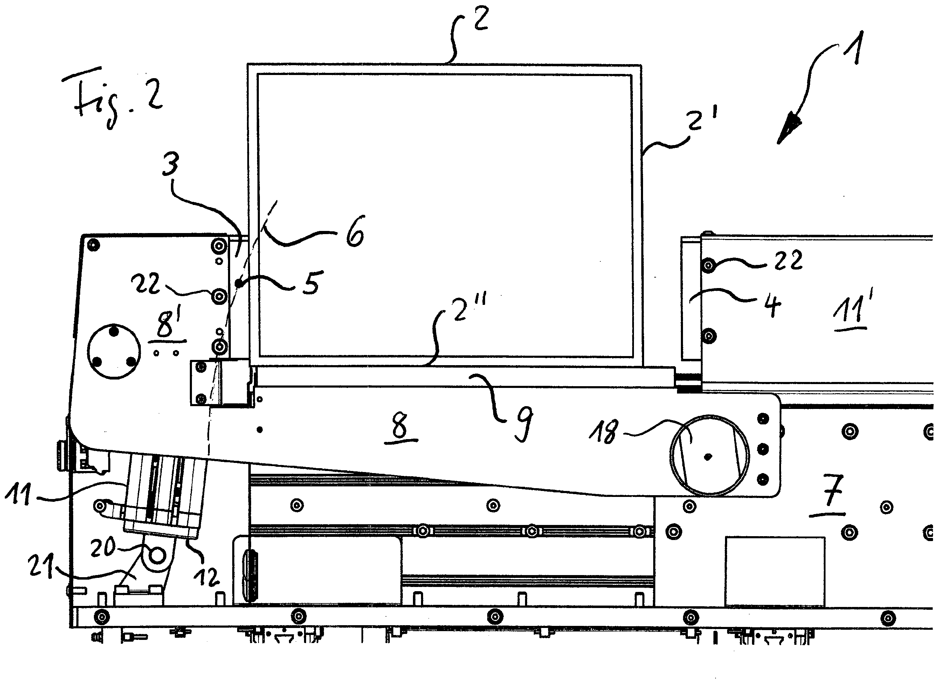

Die Figur 2 zeigt eine Seitenansicht der Spannvorrichtung 1, bei der ein zu bearbeitendes Werkstück 2 zwischen den Spannbacken 3 und 4 einliegt. Die Spannvorrichtung 1 ist in einem Endbereich des Spannbalkens 7 angeordnet. Jeder Spannbalken 7 auf dem CNC-Bearbeitungszentrum 10 weist mindestens eine Spannvorrichtung 1 auf. Die Spannvorrichtung 1 besteht im Prinzip aus zwei Spannbacken 3,4 die jeweils einen Antrieb 11, 11' aufweisen, wobei der Antrieb 11' für die Spannbacke 4 in dieser Darstellung nicht gezeigt ist. In dieser Darstellung befindet sich die Spannbacke 4 im gelösten Zustand, das heißt, sie steht nicht mit dem Werkstück 2 in Berührung. Im eingespannten Zustand berührt die Spannbacke 4 das Werkstück 2 an einer senkrechten Fläche 2'. Die untere Fläche 2" des Werkstückes 2 liegt auf mindestens einer Auflageschiene 9, die mit dem Verbindungselement 8 verbunden ist. Das Material, aus dem die beiden Spannbacken 3,4 und die Auflageschiene 9 gefertigt sind, ist in der Regel ein Kunststoff, zum Beispiel Teflon, um so die Oberflächen des Werkstücks 2 beim Ein- und Ausspannen des Werkstücks nicht zu beschädigen. Sowohl die Spannbacken 3,4 als auch die Auflageschiene 9 sind auswechselbar ausgebildet und werden je nach dem zu bearbeitenden Material des Werkstücks 2 ausgewählt. Die Spannbacken 3,4 werden mit den Befestigungselementen 22 an den jeweiligen Einrichtungen befestigt. Die Spannbacke 3 ist an einem abgewinkelten Verbindungselement 8,8' angeordnet. Das Verbindungselement 8 verbindet die bewegliche Spannbacke 3 mit einem Gelenk 18, das den Drehpunkt des Verbindungselements 8 bildet. Ein ausgewählter Punkt auf der Spannbarke 3, hier der obere Eckpunkt 5 der Spannbacke 3, bewegt sich während des Spann-, bzw. Entspannungsvorgangs der Spannbacke 3 auf einer gekrümmten Bahn 6. Der Eckpunkt 5 muss nicht zwingend eine Kreisbahn durchlaufen, sondern kann auch andere Bahnen beschreiben, z. B. eine elliptische Bahn, oder ähnliche gekrümmte Wege, die an dieser Stelle nicht weiter beschrieben werden. Der abgewinkelte Teil 8' des Verbindungselements 8 bildet gleichzeitig die seitliche Wand eines Gehäuses, in dem der Antrieb 11 der Spannbacke 3 angeordnet ist. Die Auflageschiene 9 ist im wesentlichen an dem Verbindungselement 8 befestigt. Der Antrieb 11 ist an seinem unteren Ende mit einem Gelenk 20 an einem Stützpunkt 21 der Grundkonstruktion des Spannbalkens 7 gelenkig befestigt. Der Antrieb 11 kann elektrisch, hydraulisch oder pneumatisch betrieben werden. Im vorliegenden Ausführungsbeispiel wird der Antrieb 11 pneumatisch betrieben.

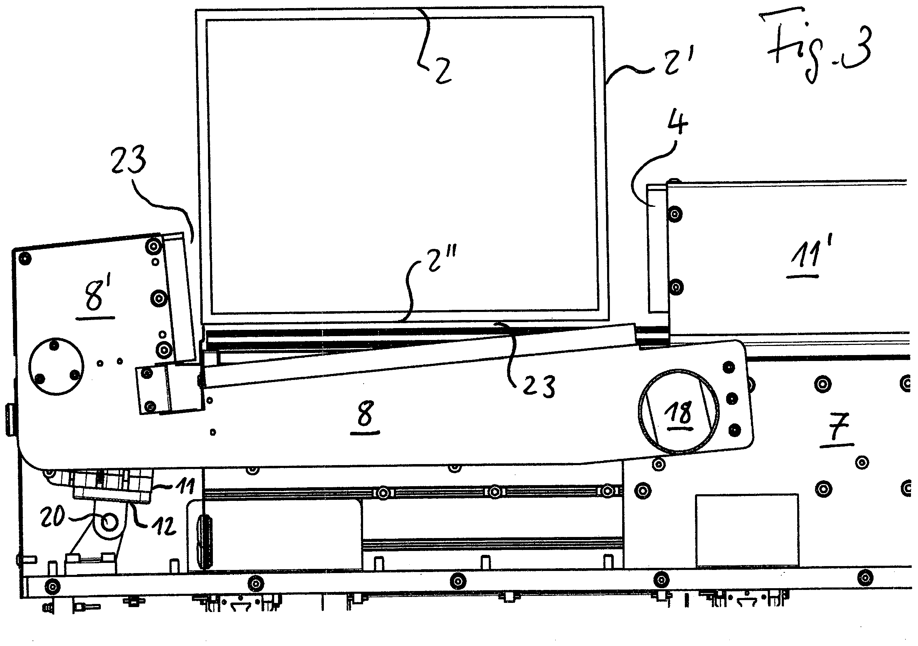

Die Figur 3 zeigt eine Seitenansicht der Spannvorrichtung 1, bei der ein zu bearbeitendes Werkstück 2 zwischen den Spannbacken 3,4 einliegt und die Spannbacken 3,4 und die Auflageschiene 9 die gesamte Oberfläche des Werkstücks 2 nicht berühren. Zwischen den Spannbacken 3,4 und der Auflageschiene 9 entstehen bei der abgesenkten Spannbacke 3 Luftspalte 23, in denen keine Bearbeitungsspäne oder feste Teile hängen bleiben können, die bei Verschiebung des Spannbalken 7 die Oberflächen des Werkstücks 2 beschädigen könnten. Die Absenkung des Verbindungselements 8,8' wird durch den Antrieb 11 bewirkt, was an anderer Stelle näher beschrieben wird.

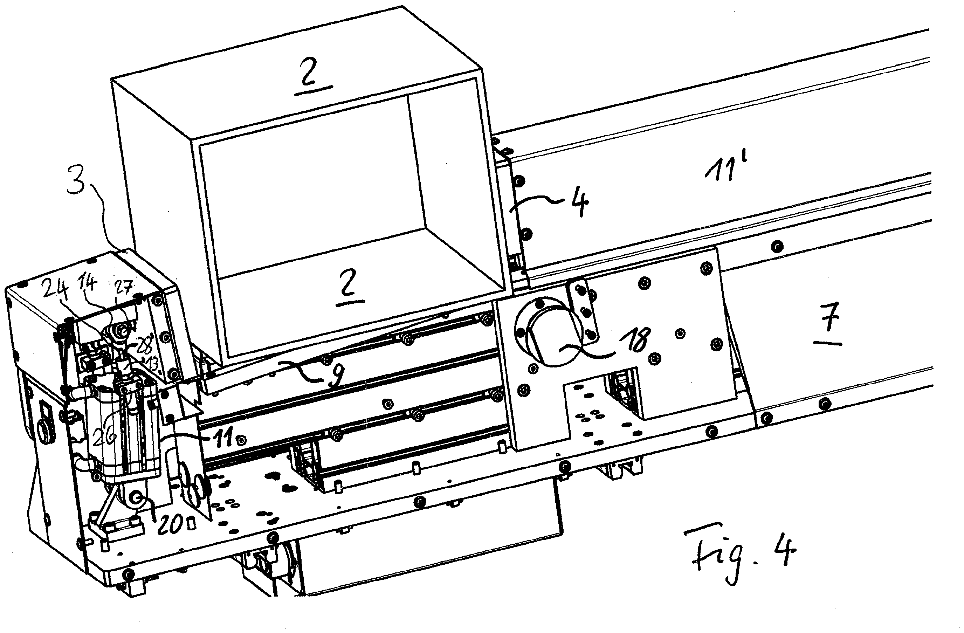

Die Figur 4 zeigt eine perspektivische Seitenansicht des einen Endes des Spannbalkens 7, auf dem die Spannvorrichtung 1 mit eingehängtem Werkstück 2 angeordnet ist. In dieser Darstellung ist das Verbindungselement 8,8` zwischen dem Gelenk 18 und der Spannbacke 3 nicht gezeigt, um damit den Antrieb 11 für die Spannbacke 3 sichtbar zu machen. Hier ist die Spannbacke 3 im abgesenkten Zustand gezeigt. Der abgesenkte Zustand der Spannbacke 3 ist gleichzeitig auch der entspannte Zustand der Spannvorrichtung, in dem das Werkstück 2 frei zwischen den Spannbacken 3,4 und der Auflageschiene 9 in der Luft hängt. Zwischen der Spannbacke 4 und dem Werkstück 2 ist ebenfalls ein Luftspalt 23, der hier in dieser Darstellung nicht sichtbar ist. Um die Spannbacke 3 auf und nieder zu stellen, ist die Zylinderstange 24, die die Kraft des Antriebs 11 auf die Spannbacke 3 überträgt, drehbar mittels eines Gelenkes 27 an der Aufnahmekonstruktion der Spannbacke 3 gelenkig befestigt. Somit hängt der Antrieb 11 beweglich zwischen den beiden Gelenken 20 und 27. Der Antrieb 11 wird elektronisch-pneumatisch oder ähnlich angesteuert und kann mit Hilfe der Zylinderstange 24 die Spannbacke 3 innerhalb vorgegebener Grenzen bewegen. Im oberen Bereich des Antriebs 11 ist ein Dämpfungselement 13 mittels einer Schelle 26 am beweglichen Verbindungselement befestigt. Oberhalb des Dämpfungselements 13 ist ferner ein definiertes Anschlagelement 14 angeordnet, auf das der Stempel 27 des Dämpfungselements 13 auftrifft, um damit die schnelle Bewegung der Spannbacke 3 während des Spannvorgangs zu verlangsamen.

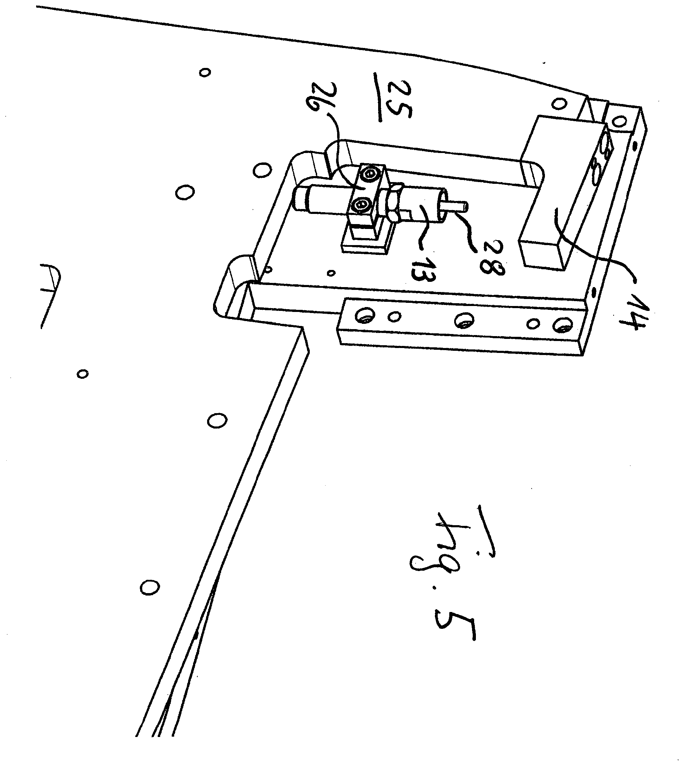

Die Figur 5 zeigt eine vergrößerte, perspektivische Allein-Darstellung des Dämpfungselements 13, das mit einer Schelle 26 an dem beweglichen Teil einer Spannbacke 3 einstellbar befestigt ist. In dieser Darstellung ist die Spannvorrichtung 1 in ihrem entspannten Zustand gezeigt, d.h., dass die Spannbacken 3 und 4 das Werkstück 2 nicht berühren. Aus dem Zylinder des Dämpfungselements 13 ragt ein Stempel 28 heraus, dessen Spitze beim Spannvorgang der Spannvorrichtung 1 an ein Anschlagelement 14 anschlägt und beim Eindrücken des Stempels 28 in den Zylinder des Dämpfungselements 13 den Spannvorgang in seiner Geschwindigkeit dämpft. Das Anschlagelement 14 ist an einem feststehenden Konstruktionselement 25 der Konstruktion der Spannvorrichtung 1 befestigt und definiert das Ende des Hubs der Spannbacke 3.

Zusammenfassend darf festgestellt werden, dass mit der vorliegenden Erfindung eine Spannvorrichtung 1 auf einem CNC-Bearbeitungszentrums vorgestellt wird, die ein berührungsloses Verschieben mindestens eines Spannbalkens 7 ermöglicht. Mit dieser neuartigen Spannvorrichtung 1 wird eine Beschädigung der Oberfläche eines zu bearbeitenden Werkstücks 2 vermieden, weil das Werkstück 2 während des Verschiebens des Spannbalkens 7 auf dem CNC-Bearbeitungszentrum weder mit den Spannbacken 3,4 noch mit der darunterliegenden Auflageschiene 9 in Berührung kommt, denn mittels eines Verbindungselementes 8, das zwischen einem Gelenk 18 und der beweglichen Spannbacke 3 angeordnet ist, wird die Spannbacke 3 zusammen mit der Auflageschiene 9 abgesenkt, bzw. entfernt. Während des Absenkvorgangs beschreibt ein vorbestimmter Eckpunkt 5 auf der Spannbacke 3 eine gekrümmte Bahn 6, sodass mit der Drehbewegung des Verbindungselements 8 und damit des Eckpunktes 5 sowohl die Spannbacke 3 als auch die Auflageschiene 9 gleichzeitig von der Oberfläche des zu bearbeitenden Werkstücks 2 entfernt wird.

## Patentansprüche

1. Verfahren zum kontaktlosen Verschieben zumindest eines Spannbalkens (7) auf einem CNC-Bearbeitungszentrum (10), wobei der mindestens eine Spannbalken (7) versetzt werden kann, ohne ein einzuspannendes Werkstück (2) während des Verschiebevorgangs des Spannbalkens (7) zu berühren, **dadurch gekennzeichnet, dass** ein Punkt (5) auf mindestens einer beweglichen Spannbacke (3) von zwei beweglichen Spannbacken (3,4) auf einem Spannbalken (7) eine Bewegung auf einer gekrümmten Bahn (6) ausführt, sodass mit der Bewegung auf der gekrümmten Bahn (6) sowohl die Spannbacke (3) als auch eine damit verbundene Auflageschiene (9), die mit der beweglichen Spannbacke (3) verbunden ist, gleichzeitig von der Oberfläche des zu bearbeitenden Werkstückes (2) entfernt werden.

2. Spannvorrichtung (1) zum Befestigen eines Werkstückes (2) auf einem CNC-Bearbeitungszentrum (10) mit einer Mehrzahl von Spannbalken (7), auf dem die Spannvorrichtung (1) mit mindestens zwei beweglichen Spannbacken (3,4) angeordnet ist, **dadurch gekennzeichnet, dass** sich mindestens ein Punkt (5) einer der beiden beweglichen Spannbacken (3) auf einer Bahn (6) bewegt, die mindestens eine Krümmung aufweist, wobei diese bewegliche Spannbacke (3) mit einer Auflageschiene (9) verbunden ist, durch die die Abstützung des Werkstücks (2) erfolgt.

3. Vorrichtung nach Anspruch 2, **dadurch gekennzeichnet, dass** die mindestens eine Krümmung beispielsweise als Kreisbahn ausgebildet ist, die zum Entspannen des Werkstückes (2) in der Spannvorrichtung dient.

4. Vorrichtung nach einem der vorangegangenen Ansprüche, **dadurch gekennzeichnet, dass** die mindestens eine Spannbacke (3) gelenkig mit mindestens einem Punkt des Spannbalkens (7) drehbar verbunden ist.

5. Vorrichtung nach einem der vorangegangenen Ansprüche, **dadurch gekennzeichnet, dass** die mindestens eine Spannbacke (3) mit mindestens einem Verbindungselement (8), das als Hebelarm ausgebildet sein kann, verbunden ist.

6. Vorrichtung nach einem der vorangegangenen Ansprüche, **dadurch gekennzeichnet, dass** die mindestens eine Spannbacke (3) mit einem Antrieb (11) gelenkig verbunden ist, wobei das eine Ende (12) des Antriebs (11) gelenkig mit dem Spannbalken (7) verbunden ist.

7. Vorrichtung nach einem der vorangegangenen Ansprüche, **dadurch gekennzeichnet, dass** die bewegliche Spannbacke (3) mindestens ein Dämpfungselement (13) und mindestens ein Anschlagelement (14) aufweist.

8. Vorrichtung nach einem der vorangegangenen Ansprüche, **dadurch gekennzeichnet, dass** auf mindestens einer Transportschiene (15) mindestens zwei Spannbalken (7) angeordnet sind, die quer zur Längsachse der mindestens einen Transportschiene (15) bewegt werden können.

9. Vorrichtung nach einem der vorangegangenen Ansprüche, **dadurch gekennzeichnet, dass** die Spannvorrichtung (1) elektrisch oder hydraulisch oder pneumatisch betrieben wird und elektronisch ansteuerbar ist.

10. Vorrichtung nach einem der vorangegangenen Ansprüche, **dadurch gekennzeichnet, dass** der Antrieb (11) im Bereich eines Endes des Spannbalkens (7) angeordnet ist.

## Claims

1. Method for the contactless displacement of at least one tension bar (7) on a CNC machining center (10), wherein the at least one tension bar (7) can be displaced without touching a workpiece (2) to be clamped during the displacement process of the tension bar (7), **characterIzed in that** a point (5) on at least one movable clamping jaw (3) of two movable clamping jaws (3,4) on a clamping beam (7) executes a movement on a curved path (6), so that with the movement on the curved web (6), both the clamping jaw (3) and a support rail (9) connected thereto, which is connected to the movable clamping jaw (3), can be removed simultaneously from the surface of the workpiece (2) to be machined.

2. Clamping device (1) for fastening a workpiece (2) on a CNC machining center (10) with a plurality of clamping beams (7), on which the clamping device (1) with at least two movable clamping jaws (3, 4) is arranged, **characterIzed in that** at least one point (5) of one of the two movable jaws (3) moves on a path (6) which has at least one curvature, this movable jaw (3) being connected to a support rail (9) through which the workpiece (2) is supported.

3. Device according to claim 2, **characterIzed in that** the at least one curvature is designed, for example, as a circular path, which is used to relax the workpiece (2) in the clamping device.

4. Device according to one of the preceding claims, **characterIzed in that** the at least one clamping jaw (3) is pivotally connected to at least one point of the clamping beam (7) rotatably.

5. Device according to one of the preceding claims, **characterIzed in that** the at least one clamping jaw (3) is connected to at least one connecting element (8), which can be designed as a lever arm.

6. Device according to one of the preceding claims, **characterIzed in that** the at least one clamping jaw (3) is articulated to a drive (11), one end (12) of the drive (11) being articulated to the clamping beam (7).

7. Device according to one of the preceding claims, **characterIzed in that** the movable clamping jaw (3) has at least one damping element (13) and at least one stop element (14).

8. Device according to one of the preceding claims, **characterIzed in that** at least two clamping beams (7) are arranged on at least one transport rail (15), which can be moved transversely to the longitudinal axis of the at least one transport rail (15).

9. Device according to one of the preceding claims, **characterIzed in that** the clamping device (1) is operated electrically or hydraulically or pneumatically and can be controlled electronically.

10. Device according to one of the preceding claims, **characterIzed in that** the drive (11) is arranged in the region of one end of the clamping beam (7).

## Revendications

1. Procédé de déplacement sans contact d'au moins une barre de serrage (7) sur un centre d'usinage CNC (10), dans lequel l'au moins une poutre de serrage (7) peut être déplacée sans toucher une pièce (2) à serrer pendant le processus de déplacement de la poutre de serrage (7),**caractérisé en ce qu'**un point (5) sur au moins une mâchoire de serrage mobile (3) de deux mâchoires de serrage mobiles (3, 4) sur une poutre de serrage (7) exécute un mouvement sur un trajet incurvé (6), de sorte qu'avec le mouvement sur la bande incurvée (6), à la fois la mâchoire de serrage (3) et un rail de support (9) relié à celle-ci, qui est relié à la mâchoire de serrage mobile (3), peuvent être retirés simultanément de la surface de la pièce (2) à usiner.

2. Dispositif de serrage (1) pour fixer une pièce (2) sur un centre d'usinage CNC (10) avec une pluralité de poutres de serrage (7), sur lequel le dispositif de serrage (1) avec au moins deux mâchoires de serrage mobiles (3, 4) est agencé, **ca ractérisé** en ce qu'au moins un point (5) d'un des deux mâchoire de serrage mobiles (3) se déplace sur un trajet incurvé (6) qui présente au moins une courbure, ce mâchoire de serrage mobile (3) étant relié à un rail de support (9) à travers lequel la pièce (2) est supportée.

3. Dispositif selon la revendication 2, **caractérisé en ce que** la au moins une courbure est conçue, par exemple, comme un chemin circulaire, qui est utilisé pour détendre la pièce (2) dans le dispositif de serrage.

4. Dispositif selon l'une des revendications précédentes, **ca ractérisé** en ce que la au moins une mâchoire de serrage (3) est reliée de manière pivotante à au moins un point de la poutre de serrage (7) de manière rotative.

5. Dispositif selon l'une des revendications précédentes, **ca ractérisé** en ce que la au moins une mâchoire de serrage (3) est reliée à au moins un élément de liaison (8), qui peut être réalisé sous la forme d'un bras de levier.

6. Dispositif selon l'une des revendications précédentes, **ca ractérisé** en ce que la au moins une mâchoire de serrage (3) est articulée à un entraînement (11), une extrémité (12) de l'entraînement (11) étant articulée à la poutre de serrage (7).

7. Dispositif selon l'une des revendications précédentes, **caractérisé en ce que** le mâchoire de serrage mobile (3) comporte au moins un élément amortisseur (13) et au moins un élément de butée (14).

8. Dispositif selon l'une des revendications précédentes, **ca ractérisé** en ce qu'au moins deux poutres de serrage (7) sont disposées sur au moins un rail de transport (15), déplaçable transversalement à l'axe longitudinal dudit au moins un rail de transport (15).

9. Dispositif selon l'une des revendications précédentes, **ca ractérisé** en ce que le dispositif de serrage (1) est actionné électriquement ou hydrauliquement ou pneumatiquement et peut être commandé électroniquement.

10. Dispositif selon l'une des revendications précédentes, **ca ractérisé** en ce que l'entraînement (11) est agencé au niveau d'une extrémité de la poutre de serrage (7).
